# EUROPÄISCHE PATENTSCHRIFT

(11) **EP 1 601 484 B1**
(45) Veröffentlichungstag und Bekanntmachung des Hinweises auf die Patenterteilung: **07.11.2007**
(21) Anmeldenummer: 03709742.5
(22) Anmeldetag: 04.03.2003
(51) Int. Cl.: B23D 15/12, B23B 35/00

(54) **SCHLAGSCHNEIDEVORRICHTUNG**
IMPACT CUTTING DEVICE
DISPOSITIF DE COUPE PAR IMPACT

(43) Veröffentlichungstag der Anmeldung: 07.12.2005
(73) Patentinhaber: Schuster, Helmut, 86920 Denklingen (DE)
(72) Erfinder: Schuster, Helmut, 86920 Denklingen (DE)
(74) Vertreter: Mollekopf, Gerd Willi
(86) Internationale Anmeldenummer: PCT/EP2003/002177
(87) Internationale Veröffentlichungsnummer: WO 2004/078396

(56) Entgegenhaltungen:
- EP-A- 0 833 714
- GB-A- 568 752
- US-A- 4 840 236
- US-A- 5 305 672

## Beschreibung

Die Erfindung betrifft eine Schlagschneidevorrichtung zum adiabatischen Trennen von Werkstücke sowie ein Verfahren zum Beschleunigen eines Schlagelements bei einer Schlagschneidevorrichtung gemäß dem Oberbegriff der Ansprüche 1 und 18. Eine derartige Vorrichtung und ein derartiges Verfahren sind aus der US-A-5305672 bekannt.

Beim Hochgeschwindigkeits-Schlagschneiden wird ein hoher Impuls auf eine bewegliche Matrize übertragen, die durch den Impuls lateral gegen eine starre Matrize verschoben wird. Zwischen den Matrizen ist in einem Durchgang durch die Matrizen das Werkstück eingespannt, wobei deren Querschnitt dem des zu trennenden Werkstücks entspricht. Die Beobachtungen zeigen, dass das zu schneidende Werkstück bei sehr kurz, aber heftig einwirkendem Impuls nahezu ohne plastische Verformung trennbar ist. Dabei wird die verschiebbare Matrize lediglich um wenige zehntel Millimeter gegenüber der starren Matrize versetzt. Problematisch ist hierbei einerseits, einen reproduzierbaren Impuls mit genauer Stärke auf die bewegliche Matrize zu übertragen, und andererseits die Impulsenergie, die nicht in Trennenergie umgewandelt wurde, so zu dämpfen, dass die Schlagschneidevorrichtung auch für den Dauereinsatz geeignet ist.

In der DE 695 19 238 T2 (entsprechend EP 08 33 714 B1) ist eine Schlagmaschine beschrieben, bei der das Werkstück zwischen einer starren und einer beweglichen Matrize eingespannt ist. Auf der beweglichen Matrize ruht ein Schlagbolzen, auf den mittels eines hydraulisch bewegten Kolbens ein Schlagimpuls übertragen wird. Ziel ist es hier, eine möglichst hohe Schlagrate zu erreichen, so dass beispielsweise eine hohe Schneidrate von Drahtstiften bestimmter Länge erreicht wird. Zur Erreichung der hohen Schlagrate durch den hydraulisch betätigten Kolben wird eine spezielle Kolben/Zylinderanordnung vorgeschlagen.

Auch die US 4,840,236 schlägt einen hydraulisch-pneumatischen Aktuator zur Übertragung hoher Impulse auf ein zu komprimierendes oder zu schneidendes Werkstück vor. Neben einer Zylindergestaltung für eine hohe Beschleunigung des Kolbens wird auch eine Anordnung zur Abbremsung des Kolbens vorgeschlagen.

Die US-A-5,305,672 offenbart eine Schneidevorrichtung mit einer Beschleunigungseinheit. Die Beschleunigungseinheit umfasst einen rotierenden Massekörper, an dessen Außenumfang eine Schlagnocke angeordnet ist. Zur Beschleunigung eines Schlaghammers wird der Schlaghammer in die Bewegungsbahn der Schlagnocke eingeschwenkt. Da der Massekörper mit konstanter Geschwindigkeit umläuft, schlägt die Schlagnocke gegen den Schlaghammer und erteilt diesem einen entsprechenden Impuls, wodurch der Schlaghammer beschleunigt wird und gegen das Werkzeug, bzw. dessen Schlagfläche fliegt. Da die Schlagnocke am Massekörper eine Kreisbewegung am hinteren Ende des Schlaghammers beschreibt, besteht nur sehr kurzzeitig und eine sehr kurze Distanz ein Kontakt zwischen Schlagnocke und Schlaghammer zur Beschleunigung. Durch den Schlag wird der Schlaghammers von der hinteren Position (unmittelbar vor dem Schlag) gegen die Schlagfläche des Werkzeugs in einer vorderen Position beschleunigt. Das Werkzeug umfasst eine durch den Schlag auf dessen Schlagfläche in Rotation versetzte Scheibe, die den abzutrennenden Werkstückabschnitt fasst.

Es ist Aufgabe der Erfindung, eine Schlagschneidevorrichtung und ein Verfahren hierfür vorzusehen, bei denen die Beschleunigung eines Schlagelements genau einstellbar sind und die Schlagimpulse minimal auf eine Beschleunigungsvorrichtung einwirken.

Diese Aufgabe wird mit den Merkmalen des Anspruchs 1 und 18 gelöst. Vorteilhafte Ausgestaltungen sind Gegenstand der Unteransprüche.

Die bisherigen Schlagschneider sind darauf optimiert, ein Werkstück (meist in Drahtform aus einem Ausgangsmaterial und mit einer Materialstärke) mit sehr hoher Schlagrate zu trennen, so dass viele Drahtstifte für die Weiterverarbeitung erzeugt werden können. Beim Einrichten der Maschine wird das System durch Versuche so optimiert, dass einerseits eine saubere Materialtrennung und andererseits eine möglichst geringe Umwandlung des Schlagimpulses in Schockwellen innerhalb des Gerätes auftreten. Durch die anschließend lange Nutzung der Maschine mit den optimierten Parametern ist die Optimierungszeit gerechtfertigt. Bei häufig wechselnder Werkstückart (Materialform, Materialstärke, verwendetes Material etc.) ist jedoch eine solche Optimierungsphase nicht gerechtfertigt. Daher wird angestrebt, eine Änderung des Impulses des Schlagelements und die Optimierung der Schlagenergie auf möglichst einfache, reproduzierbare Weise zu erreichen. Dies ist aufgrund der dynamischen Prozesse in einem pneumatischen oder hydraulischen System sehr aufwändig und hängt von der Öltemperatur, vom verwendeten Öl, dessen Verschmutzung, der Abnutzung von Dichtelementen und dergleichen ab. Darüber hinaus sind bei den herkömmlichen Schlagschneidern das bewegte Schlagelement und die Beschleunigungseinrichtung auch während der Schlagphase miteinander verbunden, so dass einerseits die Beschleunigungseinheit mechanisch entsprechend stabil ausgelegt sein muss und andererseits einer starken mechanischen Beanspruchung unterliegt, die zum schnellen Verschleiß führen kann.

Bei der Schlagschneidevorrichtung gemäß Anspruch 1 wird vorgeschlagen, dass das Schlagelement, welches den Impuls auf eine Schneideeinheit überträgt, lösbar an eine Beschleunigungseinheit gekoppelt ist. Vor dem Auftreffen des Schlagelements auf die Schneideeinheit erfolgt durch eine Kopplungseinrichtung eine Entkopplung zwischen Beschleunigungseinheit und Schlagelement. Durch Entkoppeln der Vorgänge 'Schlagen' und 'Beschleunigen' kann jeweils der Schlagprozess und der Beschleunigungsprozess unabhängig voneinander optimiert werden, wobei vor allem durch die Entkopplung der Beschleunigungseinheit vom Schlagen diese wesentlich geringeren mechanischen Belastungen unterliegt. Weiterhin kann die Beschleunigung genau dann abgebrochen werden, wenn das Schlagelement den für das zu bearbeitende Werkstück notwendigen Impuls aufweist, so dass z.B. das Abbremsen der Beschleunigungseinheit wiederum nicht auf das Schlagelement und dessen Impuls zurückwirkt. Durch die freie 'Flugstrecke' des Schlagelements vor der Schneideeinheit ist auch eine exakte Justierung zwischen Beschleunigungseinheit und Schneideeinheit zur Reproduzierung eines vorgegebenen Schlagimpulses nicht notwendig.

Ganz besonders vorteilhaft greift ein Mitnehmer der Beschleunigungseinheit in das Schlagelement ein und führt dieses zumindest während der Beschleunigungsphase bzw. über die Beschleunigungsstrecke mit. Über den Mitnehmer wird einerseits die Beschleunigungskraft auf das Schlagelement übertragen und andererseits eine sichere Führung des Schlagelements erreicht. Die Kopplung 'zumindest' über eine Beschleunigungsstrecke bedeutet hier, dass entweder der Mitnehmer lediglich während der Beschleunigungsphase bzw. über die Beschleunigungsstrecke an das Schlagelement gekoppelt ist und nach der Beschleunigung unmittelbar eine Entkopplung stattfindet. Oder es wird noch eine vorgegebene Zeit bzw. Strecke nach der Beschleunigung eine Kopplung aufrechterhalten, so dass der Mitnehmer kraftfrei an das Schlagelement koppelt. In dieser Phase kann sich das System Schlagelement/Beschleunigungseinheit zum einen kraftfrei relaxieren und zum anderen ist der Mitnehmer unter Minimierung von Reibungskräften oder dergleichen vom Schlagelement entkoppelbar.

Vorteilhaft verläuft eine Führung des Mitnehmers zumindest über die Beschleunigungsstrecke parallel zur Bahn des Schlagelements, so dass über die Beschleunigungsstrecke bzw. die Beschleunigungsphase kein Versatz zwischen Mitnehmer und Schlagelement notwendig ist. Bei einer ganz besonders vorteilhaften Ausgestaltung wird der Mitnehmer vom Schlagelement dadurch entkoppelt, dass die Bahn des Mitnehmers nach der Beschleunigungsstrecke und gegebenenfalls einer Relaxierungsstrecke von der Bahn des Schlagelements abweicht. Dabei werden der Mitnehmer und das Schlagelement räumlich voneinander getrennt und durch eine räumliche Trennung des Schlagelements von der Schneideeinheit ist während der Schlagphase eine Wechselwirkung zwischen beiden ausgeschlossen.

Ist der Mitnehmer an einem band- oder seilartigen Element angeordnet, so lässt sich der Mitnehmer über Zug und gegebenenfalls Schub am band- oder seilartigen Element beschleunigen. Weiterhin lässt sich durch Umlenken des band- oder seilartigen Elements die Bahn des Mitnehmers auf einfache Weise ändern. Vorteilhaft ist das bandartige Element ein Riemen, beispielsweise ein Zahnriemen, oder eine Kette, die besonders hohe Beschleunigungs- bzw. Zugkräfte auf den Mitnehmer übertragen können.

Ist das bandartige Element endlos und über zumindest zwei Umlenkelemente geführt, so ist bei gleichmäßigem Antrieb des bandartigen Elements eine nahezu gleichmäßige Belastung durch das bandartige Element möglich - nahezu unabhängig von der Stellung des Mitnehmers. Besonders vorteilhaft wird das bandartige Element durch zumindest eines der Umlenkelemente angetrieben, so dass sich der Aufbau der Beschleunigungseinrichtung vereinfacht.

Weist das Schlagelement eine Ausnehmung zur Aufnahme des Mitnehmers auf und grenzt an die Ausnehmung ein Rampenelement an, so kann beim Zurückstellen des Mitnehmers dieser über die Rampe durch seitliches Auslenken des Mitnehmers in die Aufnahme zurückgeführt werden. Nach dem Entkoppeln und dem Ausführen des Schlages auf die Schneideinrichtung wird es so ermöglicht, dass durch einfaches Einführen des Mitnehmers in die Aufnahme der Mitnehmer wieder an das Schlagelement gekoppelt wird und dann das Schlagelement entgegengesetzt zur Beschleunigungsrichtung in die ursprüngliche oder eine neue Position zurückstellbar ist. Beispielsweise ist der Mitnehmer an einem bandartigen Element angeordnet und beim Überfahren der Rampe wird durch senkrechte Auslenkung des Mitnehmers zur Beschleunigungsrichtung der Mitnehmer seitlich zum Schlagelement versetzt, bis er wieder in die Ausnehmung eingreift. Selbstverständlich kann die umgekehrte Ausgestaltung vorgesehen sein, bei der der Mitnehmer eine Ausnehmung aufweist und ein vorspringendes Element des Schlagelements in die Ausnehmung des Mitnehmers eingreift.

Weist die Kopplung zwischen Schlagelement und Beschleunigungseinheit mehrere Kopplungsstellen auf und sind diese symmetrisch bzgl. der Beschleunigungsrichtung angeordnet, so wird während des Beschleunigens ein Kippmoment aufgrund der Beschleunigungskraft am Schlagelement vermieden.

Ist das Schlagelement in einer Führungseinrichtung bei seiner Bewegung in Richtung Schneideeinheit geführt, so vermindert ein Gleitelement die Reibung bei der Führung entlang der Führungseinrichtung. Ist das Gleitelement beweglich in einer Aufnahme am Schlagelement gelagert, so findet eine Entkopplung zwischen der Schlagschwingung beim Auftreffen des Schlagelements auf die Scheideeinrichtung statt. Vorteilhaft ist zusätzlich ein Dämpfungselement zwischen dem beweglichen Gleitelement und dem Schlagelement angeordnet, so dass die Schwingungsbewegung nicht unmittelbar vom Schlagelement auf die Führungseinrichtung des Schlagelements übertragen wird. Alternativ und/oder zusätzlich ist zur Schwingungsdämpfung die Schneideeinheit auf einer Stützstruktur aus Mineralguss gelagert. Dabei hat der Mineralguss hervorragende Dämpfungseigenschaften und reduziert die Schockausbreitung auf den Werkhallenboden oder die Beschleunigungseinheit.

Besonders vorteilhaft werden aus entgegenläufigen Richtungen zwei Schlagelemente auf die Schneideeinheit beschleunigt und treffen auf diese auf. Weist die Schneideeinheit dabei beispielsweise zwei bewegliche Matrizenelemente bzw. Matrixelemente auf, die schwingend gelagert sind, so kompensieren sich bei symmetrisch auftreffenden Impulsstärken die beiden Impulse, die im Idealfall vollständig in Wärme- bzw. Trennenergie transformiert werden. Dies vermindert ebenfalls die Schockwelle, die durch das Schlagschneiden entsteht.

Vorteilhaft kommt bei der Schlag- und Gegenschlaganordnung eine Beschleunigungseinheit zum Einsatz, die die Beschleunigung des Schlag- und Gegenschlagelements synchronisiert. Oder zwei Beschleunigungseinheiten sind durch wechselseitige Kopplung miteinander synchronisiert.

Weist das Schlagelement eine sich zur Schlagfläche des Schlagelements hin verjüngende Form auf, so wird der Abbremsimpuls des Schlagelements zur Schlagfläche hin konzentriert und verstärkt.

Bei einer vorteilhaften weiter bildung der Schlagschneideeinrichtung ist zwischen einem beweglichen Matrizen-element und einer Stützstruktur für die Schneideeinrichtung eine Dämpfungseinrichtung zwischen der der Schlagseite der beweglichen Matrize gegenüberliegenden Seite und der Stützstruktur angeordnet. Mit dem Dämpfungselement wird überschüssige Energie vom Schlag gedämpft, falls die Schlagenergie nicht vollständig in Trennenergie und Wärmeenergie überführt werden konnte. Mittels einer Ringfeder als Dämpfungseinrichtung wird die Überschussenergie innerhalb einer sehr kurzen Strecke in Wärmeenergie umgewandelt. Ist zusätzlich oder alternativ ein Luftspalt als Dämpfungseinrichtung vorgesehen und wird in den Luftspalt Pressluft eingeleitet, so werden einerseits Verunreinigungen aus dem Luftspalt abgeführt und andererseits dient die kontinuierliche Luftströmung zum Kühlen der Schneideeinheit.

Ist die bewegliche Matrize in einer Ausnehmung mit seitlicher Führung gelagert, so führt die in den Luftspalt zugeführte Luft ebenfalls zur Rückstellung des beweglichen Matrizenelements. Dies lässt sich dadurch unterstützen, dass bei ausgelenktem Matrizenelement die Luft aus dem Luftspalt nahezu nicht entweichen kann, und sich so ein Luftdruck aufbaut, der die Matrize mit erhöhter Kraft zurückstellt.

Ist zumindest das eine bewegliche Matrizenelement in einer Aufnahme mit seitlichen Begrenzungsflächen gelagert und werden die seitlichen Begrenzungsflächen mit Luft beaufschlagt, so werden einerseits Verunreinigungen daraus abgeführt, und das Luftpolster dient als Luftleitlager der Führung des beweglichen Matrizenelements in der Aufnahme.

Weitet sich bei dem beweglichen Matrizenelement der Öffnungsquerschnitt von der Trennkante zur Zufuhr- oder Entnahmeseite des Werkstücks auf, so muss während des Schlagvorgangs nicht das gesamte, in der Matrize gefasste Werkstück die seitlich ausgeführte Beschleunigung ausführen. Damit erhöht sich die an der Schneidestelle wirkende Impulsenergie.

Anhand von Zeichnungen werden Führungsformen der Erfindung erläutert. Es zeigen:
- Fig. 1A: eine schematische Vorderansicht einer Schlagschneidemaschine,
- Fig. 1B: eine Teilansicht der Schlagschneidemaschine beim Einkoppeln des Hammers,
- Fig. 1C: eine Teilansicht der Schlagschneidemaschine kurz vor dem Entkoppeln des Hammers,
- Fig. 1D: eine Seitenansicht der Schlagschneidemaschine,
- Fig. 2: einen schematischen Querschnitt einer Hammereinheit von oben,
- Fig. 3A und 3B: Querschnittsansichten einer Ausführung eines Matrizenblockes,
- Fig. 4A und 4B: zwei Ausführungsformen von Dämpfungselementen,
- Fig. 5: eine schematische Seitenansicht einer Doppelschlag-Schneidemaschine und
- Fig. 6: ein Blockschema der Steuerung einer Schlagschneidemaschine.

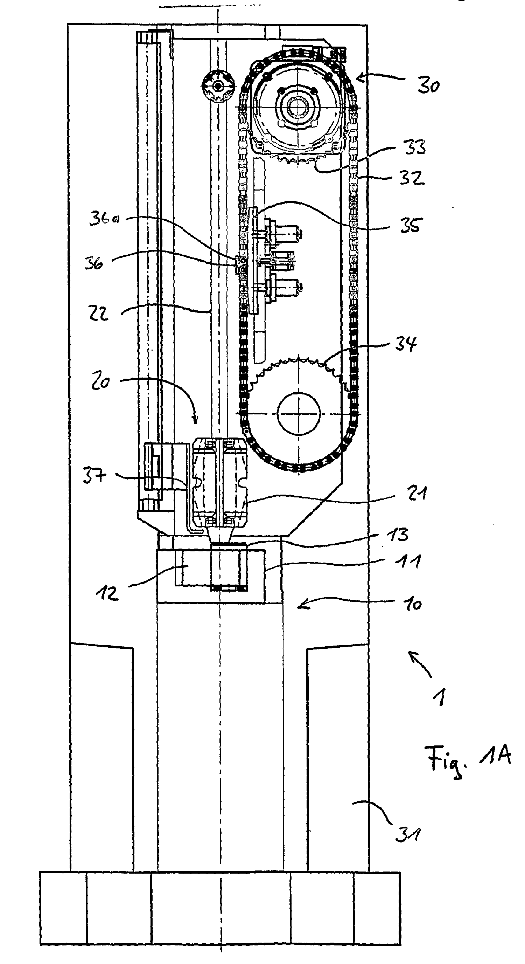

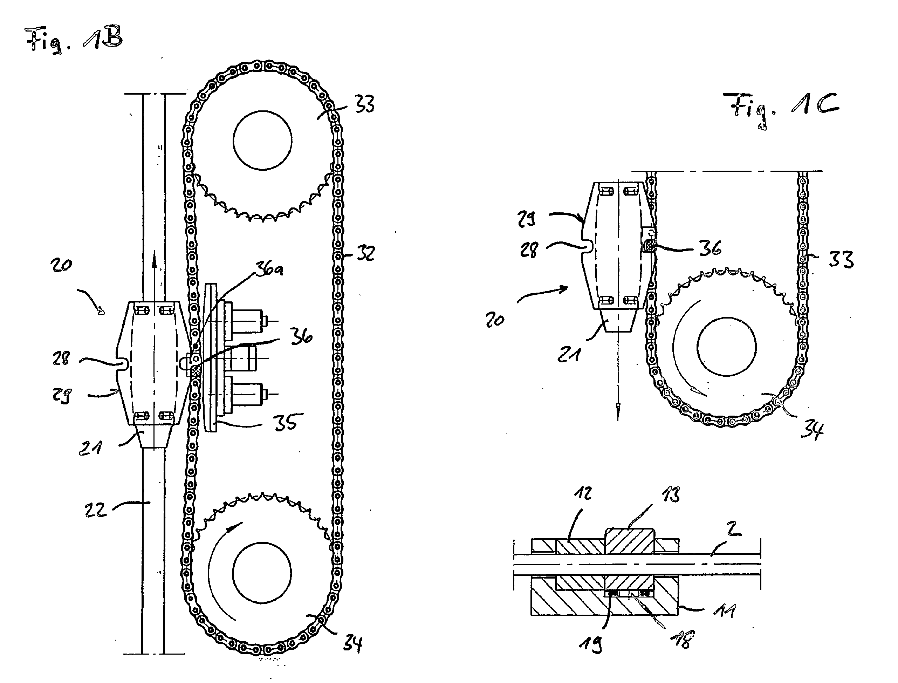

Fig. 1 A zeigt schematisch eine Vorderansicht des Aufbaus einer Schlagschneidemaschine 1. Das zu schneidende Werkstück 2 (Fig. 1C) ist in einen Matrizenblock 10 eingespannt und wird dort durch Ausübung von Schlägen mittels der Hammereinheit 20 geschnitten. Ein Prallhammer 21 der Hammereinheit 20 wird durch ein Beschleunigungsaggregat 30 beschleunigt. Der Matrizenblock 10 ruht auf einer Tragstruktur 31, an die auch eine Führung 22 der Hammereinheit 20 und das Beschleunigungsaggregat 30 angekoppelt sind. Teile der Tragstruktur 31 sind aus Mineralguss ausgebildet, der neben der hohen Trageigenschaft eine besonders gute Dämpfung gegen die Ausbreitung von Schwingungen und Schockwellen aufweist. Eine Ausbreitung von Schwingungen oder Schockwellen ausgehend vom Matrizenblock auf den Werkhallenboden bzw. auf das Beschleunigungsaggregat 30 und die Hammereinheit 20 wird somit vermieden. Umgekehrt wird auch die Ausbreitung von Schwingungen ausgehend von der Hammereinheit 20 stark gedämpft.

Beim Beschleunigungsaggregat 30 verläuft eine Kette 32 über ein oberes Antriebsrad 33 und ein unteres Umlenkrad 34. Das obere Antriebsrad 33 wird durch einen NCgesteuerten Servomotor 82 (Fig. 1D) angetrieben, der kurzzeitige, sehr hohe Beschleunigungen ermöglicht. Die Kette 32 führt einen Schlitten 36a mit, von dem ein Mitnehmer 36 hervorsteht, der wiederum in eine Ausnehmung 28 des Hammers 21 eingreift. Zumindest über einen Teil der Beschleunigungsstrecke verläuft neben der Kette 32 eine Kettenführung 35. Die Kettenführung umfasst einen Aktuator, hier einen pneumatischen Aktuator, der eine neben der Kette verlaufende Kettenführungsschiene senkrecht zur Kette zustellt. In der Beschleunigungsphase ist die Kettenführungsschiene der Kette beigestellt (wie in Fig. 1A dargestellt) und begrenzt bzw. dämpft seitliche, senkrecht zur Zugrichtung auftretende Kettenausschläge die durch die Beschleunigung bzw. das spätere Abbremsen hervorgerufen werden könnten. Die Kontaktfläche der Kettenführungsschiene zur Kette ist mit einem Gleitmaterial versehen.

Zum Einführen des Mitnehmers 36 in die Ausnehmung 28 beim Ankoppeln des Hammers 21 ist die Kettenführung zurückgezogen, so dass die Kette seitlich ausgelenkt werden kann: Fig. 1B stellt eine Teilansicht der Schlagschneidemaschine in einer Phase kurz vor dem Einkoppeln des Mitnehmers 36 in die Ausnehmung 28 des Hammers dar. Der Hammer ist durch eine Hebeeinheit 37 nach dem Schlag in die in Fig. 1B dargestellte Position angehoben und der Schlitten 36a wird durch die Kette 33 nach oben gefahren. Fig. 1C zeigt eine Phase während der Beschleunigung, während der der Mitnehmer 36 vollständig in die Ausnehmung 28 des Hammers 21 eingreift.

Bei einer hier nicht dargestellten Ausführung wird die Kette 32 alternativ oder zusätzlich durch das untere Rad 34 angetrieben, so dass die Kette zwischen dem unteren und oberen Rad 34, 35 über die Beschleunigungsstrecke gespannt und versteift ist.

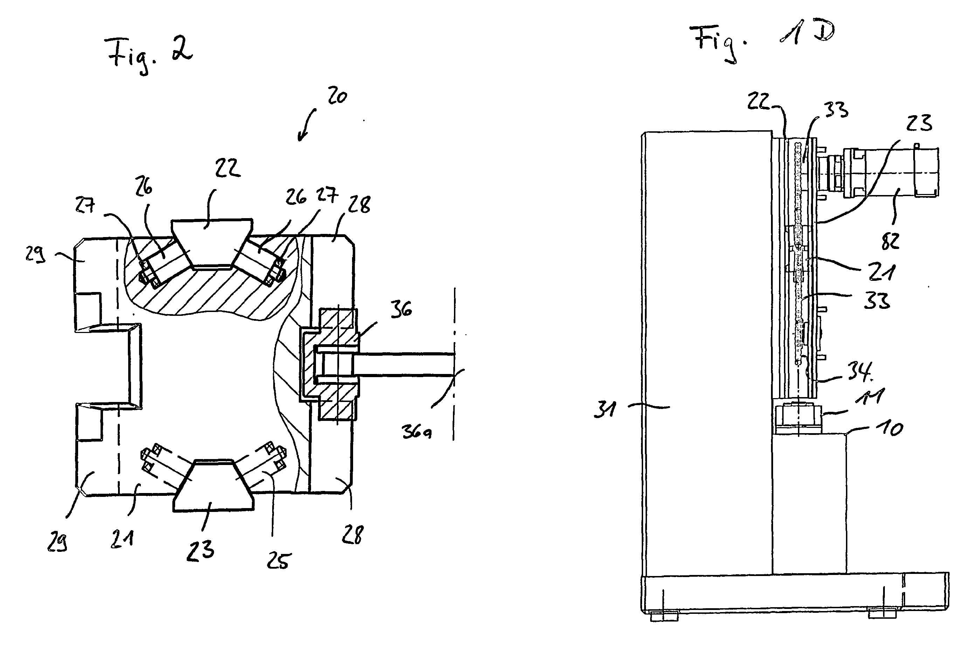

Fig. 2 zeigt eine schematische Querschnittsansicht der Hammereinheit 20 von oben. Der Hammer 21 ist in einer ersten und zweiten Führungsschiene 23, 24 der Führung 22 geführt. Der Hammer 21 steht nicht unmittelbar mit den Führungsschienen 23, 24 in Berührung, sondern wird über Gleitblöcke 26, die in Vertiefungen 25 ruhen, an den Schienen 23, 24 gleitend geführt. Die Gleitblöcke 26 sind beispielsweise Metallmatrizen, in die Molybdänsulfid (MoS) als Gleitmittel eingelagert ist. Zwischen der Rückseite der Gleitblöcke 26 und dem Boden der Vertiefung 25 sind Dämpfungselemente 27 angeordnet, die Impulse des Hammers 21 in Wärme umsetzen und damit die Übertragung von Schwingungen oder Schockwellen vom Hammer 21 auf die Schienen 23, 24 dämpfen. Bei einer weiteren, hier nicht dargestellten Ausgestaltung können auch allen oder einem Teil der Seitenwände zwischen dem Gleitblock 26 und der Vertiefung 25 Dämpfungselemente zugeordnet sein. Der Mitnehmer 36 des Beschleunigungsaggregats 30 weist seitliche Vorsprünge auf, die über einen Steg mit dem Schlitten 36a verbunden sind. Die beiden seitlichen Vorsprünge des Mitnehmers 36 greifen in die beiden seitlichen Ausnehmungen 28 am Hammer 21 ein. An die Seitenwände der Ausnehmungen 28 schließen Rampen 29 an, wobei die Vorsprünge des Mitnehmers 36 beim Zurückführen des Hammers 21 aus der unteren Position (beim Matrizenblock 10) über die Rampe 29 gleiten. Dabei werden die Kette 32 und der Schlitten 36a ausgelenkt (Fig. 1B) und nach Erreichen der Ausnehmung 28 springen die Vorsprünge des Mitnehmers 36 in die Ausnehmung 28, so dass der Hammer 21 durch das Beschleunigungsaggregat 30 angehoben und in seine Startposition zurückgeführt werden kann.

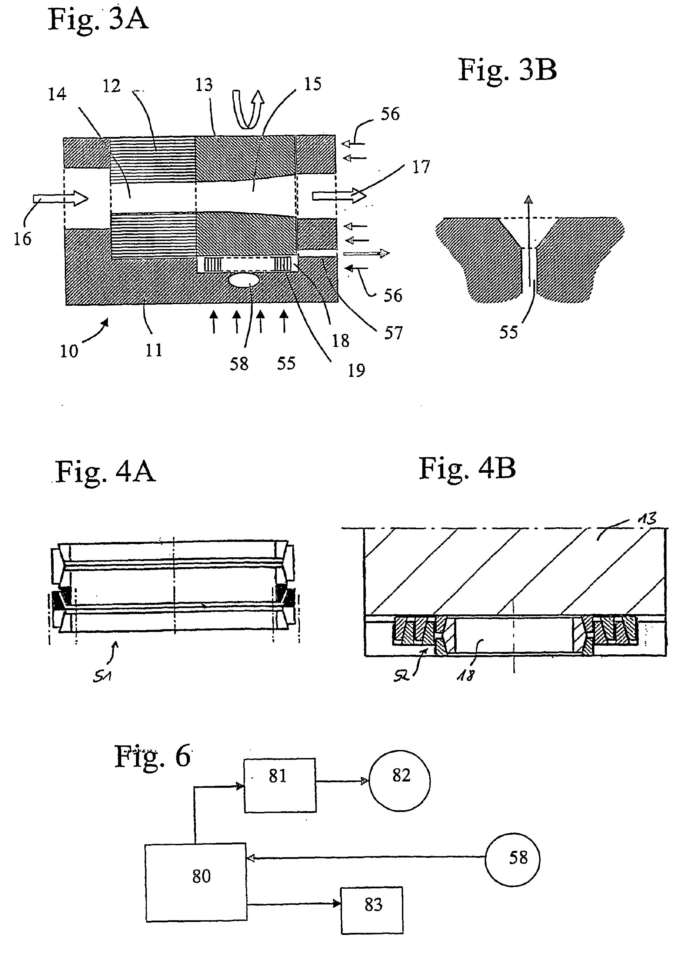

Fig. 3A zeigt einen Werkzeughalter 11 des Matrizenblocks 10 im Querschnitt. In eine von oben nach unten führende Ausnehmung des Werkzeughalters 11 sind eine starre Matrize 12 und eine bewegliche Matrize 13 austauschbar eingesetzt. Das Matrizenpaar 12, 13 hat einen ersten und zweiten Durchgang 14,15, deren Querschnitt jeweils auf das zu bearbeitende Werkstück angepasst ist. Zum Schneiden eines Werkstücks einer anderen Beschaffenheit (Querschnitt, Material des Werkstücks, Form des Werkstücks usw.) wird jeweils das Matrizenpaar 12, 13 im Werkzeughalter 11 ausgetauscht. Durch nicht dargestellte Befestigungselemente wird die starre Matrize 12 fest im Werkzeughalter 11 gehalten, während unterhalb der beweglichen Matrize 13 eine Vertiefung 18 angeordnet ist, die während des Schlags eine geringe Bewegung der Matrize 13 nach unten erlaubt. Der Hammer 21 und/oder die Matrizen 12, 13 sind aus einem besonders schlagfesten Stahl ausgebildet, beispielsweise von der Firma STM-Stahl das Produkt der Kennnummer 1.2379 (Spezialstahl). Durch die Pfeile 16 und 17 sind die Eintrittsseite und die Austrittsseite des Werkstücks 1 am Werkzeughalter 11 dargestellt, wobei natürlich ein umgekehrtes Einführen und Entnahme des Werkstücks ebenso möglich ist. Der gebogene Pfeil symbolisiert die Ausführung des Schlags auf die bewegliche Matrize 13.

Der zweite Durchgang 15 der beweglichen Matrize 13 weitet sich von der Schnittstelle zur Eintritts- bzw. Austrittsseite 17 hin auf. Dadurch ist einerseits das Werkstück im Bereich der Schnittkante spielfrei gefasst, während bei längeren Werkstücken ein Versetzen des Endes des Werkstücks außerhalb der Matrize 13 beim Schlagschneiden vermieden wird. Dadurch reduziert sich die während des Schlags zu beschleunigende Masse und die aufzubringende Impulsenergie ist bei längeren Werkstücken weitgehend unabhängig von der Länge des abzutrennenden Werkstücks.

In der Vertiefung 18 ist ein Dämpfungselement 19 angeordnet, das den Schlagimpuls bzw. den Teil des Schlagimpulses, der nicht in Trennungs- und Deformationsenergie beim Schlag umgewandelt wurde, auffängt und in Wärme umwandelt. Das Dämpfungselement 19 setzt einer Verschiebung der beweglichen Matrize 13 eine sehr hohe Kraft entgegen, so dass diese auch bei Vorhandensein von Überschussenergie innerhalb einer sehr kurzen Auslenkungsstrecke vollständig abgebremst wird. Fig. 4A und 4B zeigen zwei Ausführungsbeispiele für das Dämpfungselement 19. Der erste Federring 51 ist aus fünf ineinander verkeilten, geschlossenen Ringelementen ausgebildet. Die so ausgebildete Reibungsfeder setzt die Verschiebung der Ringe durch Reibung in Wärmeenergie um und bewirkt eine effiziente Dämpfung der beweglichen Matrize 13. Mit 52 ist eine zweite Federringanordnung bezeichnet, bei der die Ringe teilweise übereinander und untereinander positioniert sind, so dass die Grundfläche der Ausnehmung 18 weiter ausgenutzt wird.

Nach Ausführung eines Schlags auf das bewegliche Matrizenelement 13 erfolgt die Rückstellung der Matrize 13 durch das Dämpfungselement 19. Alternativ oder zusätzlich kann wie in Fig. 3A dargestellt, die Rückstellung durch Aufbau eines Druckluftpolsters unterhalb des ausgelenkten Matrizenelements 13 ausgeführt werden. In die Vertiefung 18 wird, wie durch die Pfeile 55 symbolisiert, Druckluft eingeleitet, die bei angehobenem Matrizenelement 13 durch einen Auslass 57 entweicht. Bei abgesenktem Matrizenelement 13 wird der Luftauslass 57 ganz oder teilweise verschlossen, so dass sich in der Vertiefung 18 aufgrund der durch die unteren Druckluftdurchgänge 55 eingeleiteten Druckluft ein Druck aufbaut, der die Matrize 13 wieder in ihre Ausgangsstellung anhebt. Der Druckluftstrom von den Druckluftdurchgängen 55 durch die Vertiefung 18 verhindert ein Eindringen von Verunreinigungen in die Vertiefung 18 und kühlt - das Dämpfungselement 19 bzw. die untere Matrizenseite. Bei einer weiteren Ausgestaltung sind an zumindest einer seitlichen Fläche zwischen Werkzeughalter 11 und beweglicher Matrize 13 Luftspalte ausgebildet, in die über seitliche Luftdurchgänge 56 Luft einströmt. Die Druckluft zwischen beweglicher Matrize und Werkzeughalter 11 richtet die bewegliche Matrize 13 aus und ermöglicht während des Schlags ein seitliches Gleiten und danach ein Rückstellen der beweglichen Matrize 13 in die Ausgangsstellung.

Zusätzlich ist dem Werkzeughalter 11 ein Sensor 58 zugeordnet, der die Schwingungen des Werkzeughalters 11 registriert und/oder den Luftdruck in der Vertiefung 18 misst. Damit lassen sich während der Ausführung des Schlages das Vorhandensein und die Höhe von Schwingungen messen. Die Höhe der Schwingungen ist ein Maß für die überschüssige Schlagenergie, die nicht zum Trennen des Werkstücks umgewandelt wurde. Da die überschüssige Energie möglichst vermieden werden muss, dient das Signal des Sensors 58 zur Optimierung der Parameter der Schlagschneidemaschine sowie zur Kontrolle der Funktion des Schlagschneidens. Wird wie in Fig. 3A dargestellt, ein der Vertiefung 18 zugeordneter Drucksensor verwendet, so kann auch die einwandfreie Rückstellung der beweglichen Matrize 13 bei Einleitung von Druckluft in die Vertiefung 18 überprüft werden, wobei nach Rückstellung der Matrize 13 in die Ausgangsposition der Druck innerhalb der Vertiefung 18 auf einen vorgegebenen Wert abfallen muss.

Fig. 3B zeigt eine Ausführung eines Druckluftdurchgangs 55 und/oder 56, wobei mehrere solcher Bohrungen im Werkzeughalter 11 über die Fläche verteilt vorgesehen sind, so dass sich ein gleichmäßiges Luftpolster ausbildet. Wird ein Lochdurchmesser von einigen Mikrometern (10 - 200 µm) verwendet, so kann bei Komprimierung der Luft in den Spalten oder in der Vertiefung 18 die Druckluft nicht schnell genug durch die Bohrungen 55, 56 entweichen und bei Auslenkung stellt sich ein hoher Luftdruck in den Spalten und/oder der Vertiefung 18 ein.

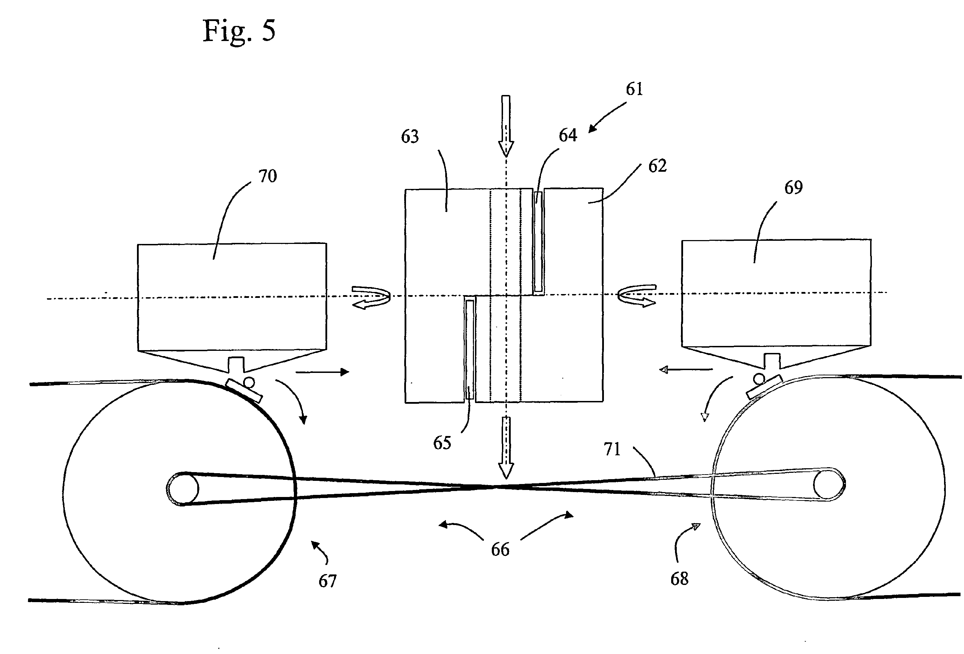

Fig. 5 zeigt schematisch die Anordnung einer Doppelschlag-Schneidemaschine 60. Bei dieser Anordnung ist eine Schneideeinheit 61 schwimmend oder zumindest in Schlagrichtung in beide Richtungen auslenkbar in einem hier nicht dargestellten Werkzeughalter gelagert. Eine erste und zweite Matrize 62, 63 sind dabei gegeneinander und bzgl. des Werkzeughalters verschiebbar. Wie in Fig. 5 dargestellt, wird das Werkstück von oben eingeführt und die abgelenkten Teile nach unten entnommen. Die Orientierung ist hier nur beispielhaft. Die Matrizen 62, 63 sind über ein erstes und zweites Dämpfungselement 64, 65 gegeneinander gelagert. Ein erster und ein zweiter Hammer 69, 70 werden bevorzugt auf einer gemeinsamen Schwerpunktsachse gegeneinander beschleunigt, wobei vorteilhaft auch die Schwerpunktsachse der Matrizen 62, 63 mit derjenigen der Hämmer 69, 70 übereinstimmt. Ein Beschleunigungsaggregat 66 beschleunigt den ersten und zweiten Hammer 69, 70 über eine erste und zweite Beschleunigungsstrecke 67, 68. Die Beschleunigung der Hämmer 69, 70 erfolgt derart, dass deren Impulse gleich sind. Zur einfacheren Dimensionierung und Einstellung sind vorzugsweise die Gewichte der Hämmer 69, 70 gleich. Symbolhaft wird durch den Riemen 71 angedeutet, dass die Beschleunigung über die erste und zweite Beschleunigungsstrecke 67, 68 synchron zueinander erfolgt. Dabei kann beispielsweise ein gemeinsamer Antrieb verwendet werden, der über ein Getriebe, eine Kette oder dergleichen beide Beschleunigungsstrecken miteinander koppelt. Das Entkoppeln der Hämmer 69, 70, die Führung der Hämmer und/oder die Beschleunigung über die Beschleunigungsstrecken 67, 68 erfolgt dabei vorteilhaft entsprechend obigen Ausführungen zur einfachen Beschleunigungsstrecke der Fig. 1.

Fig. 6 zeigt schematisch die Steuerung der Schlagschneidemaschine 1 (oder 61+66) durch eine Steuereinheit 80. An der Steuereinheit 80 werden die Betriebsparameter eingegeben, wie beispielsweise die Art der Matrize und des zu schneidenden Materials, so dass auf vorgegebene Parametersätze mit jeweils einer Standardeinstellung entsprechend der Matrizen und des zu schneidenden Materials zurückgegriffen werden kann. Die Steuereinheit 80 steuert einen Leistungssteller 81 an, der die elektrische Energie für einen Motor 82 zum Antrieb bereitstellt, um beispielsweise das obere Antriebsrad 33 anzutreiben. Die Steuereinheit 80 stellt dabei die Startposition für das Beschleunigen des Hammers 21 ein und steuert die Stärke der Beschleunigung (ggf. zeitlich über die Beschleunigungsstrecke variierbar), gegebenenfalls den Endpunkt der Beschleunigung (so dass bereits vor dem Entkoppeln eine Relaxation zwischen Hammer 21 und Mitnehmer 36 eintritt) und das Rückführen des Mitnehmers zum Rückstellen des Hammers 21 in seine Startposition für den nächsten Schlagvorgang. Weiterhin wird durch die Steuereinheit 80 eine Fördereinheit 83 angesteuert, die die Zuführung des abzuschneidenden Ausgangsmaterials in den Werkzeughalter 11 bewirkt. Zur Optimierung des Schlagprozesses wird das Sensorsignal des Sensors 58 der Steuereinheit 80 zugeführt, so dass diese anhand der Stärke der Überschussenergie (siehe oben) den Prozess durch Einstellen der Beschleunigungsparameter so lange optimieren kann, bis die Überschussenergie minimal ist.

Die Beschleunigung des Hammers 21 (entsprechend gilt dies auch für die Hämmer 69, 70) erfolgt derart, dass der Hammer bzw. Mitnehmer 36 in der Anfangsposition ist und der Beschleunigungsvorgang mittels des Motors 82 startet. Dabei kann auch bei kleinen, erforderlichen Schlagimpulsen (beispielsweise bei einem dünnen Werkstück) von einer maximalen Auslenkungsposition gestartet werden, um über eine lange Beschleunigungsstrecke bei geringer Beschleunigungsstärke beschleunigen zu können. Ist dagegen eine hohe Schlagzahl erforderlich, so wird entsprechend dem notwendigen Schlagimpuls eine möglichst kurze Beschleunigungsstrecke (niedrige Startposition des Hammers 21) gewählt, so dass der Beschleunigungs- und Rückstellvorgang in kurzer Zeit ausführbar ist. Dabei wirkt dann eine hohe Beschleunigung auf den Hammer ein.

In Höhe des unteren Umlenkrads führt das Umlenken der Kette 32 zum Zurückziehen des Schlittens 36a und damit zum Herausfahren des Mitnehmers 36 aus der Ausnehmung 28 (z.B. Fig. 5). Schon nach kurzer Umlenkung des Schlittens 36a (kleiner Umlenkwinkel am Umlenkrad 34) ist der Mitnehmer 36 aus der Ausnehmung 28 herausgezogen und die Bewegung des Hammers 21 setzt sich ungehindert in Richtung Matrizenblock 10 fort. Zum Anheben des Hammers 21 in die Startposition wird der Hammer 21 nach Ausführung des Schlags durch den in Fig. 1A dargestellten Anhebemechanismus 37 entweder synchron zum Zurückfahren des Mitnehmers 36 angehoben, so dass durch das Anheben des Hammers 21 und das Hochfahren des Mitnehmers 36 der Mitnehmer in die Vertiefung 28 eingreift, oder der Hammer 21 wird durch den Hebemechanismus auf eine Höhe oberhalb des unteren Umlenkrads 34 angehoben, so dass die Vorsprünge des Mitnehmers 36 über die untere Rampe 29 gleiten und durch Beiseitedrücken der Kette 32 (Phase Fig. 1B) die Vorsprünge des Mitnehmers nach der Rampe in die Ausnehmung 28 eingreifen. Wie oben erwähnt, wird in dieser Phase durch den Aktuator der Kettenführung 35 die Kettenführungsschiene von der Grundlinie der Kette 32 zurückgezogen. Nach Eingreifen des Mitnehmers 36 in die Ausnehmung 28 lässt sich der Hammer 21 durch das Beschleunigungsaggregat 30 in die Startposition zurückfahren.

### BEZUGSZEICHEN

- 1: Schlagschneidemaschine
- 10: Matrizenblock
- 11: Werkzeughalter
- 12: Starre Matrize
- 13: Bewegliche Matrize
- 14: Erster Durchgang
- 15: Zweiter Durchgang
- 16: Eintrittsseite
- 17: Austrittsseite
- 18: Vertiefung
- 19: Dämpfungselement
- 20: Hammereinheit
- 21: Hammer
- 22: Führung
- 23: Erste Führungsschiene
- 24: Zweite Führungsschiene
- 25: Vertiefung
- 26: Gleitblock
- 27: Dämpfungselement
- 28: Ausnehmung
- 29: Rampe
- 30: Beschleunigungsaggregat
- 31: Tragstruktur
- 32: Kette
- 33: Antriebsrad
- 34: Umlenkrad
- 35: Kettenführung
- 36a: Schlitten
- 36: Mitnehmer
- 37: Hebeeinheit
- 51: Erster Federring
- 52: Zweiter Federring
- 55: Druckluftdurchgang
- 56: Druckluftdurchgang
- 57: Luftauslass
- 58: Sensor
- 60: Doppelschlag-Schneidemaschine
- 61: Schneideeinheit
- 62: Erste Matrize
- 63: Zweite Matrize
- 64: Erstes Dämpfungselement
- 65: Zweites Dämpfungselement
- 66: Beschleunigungsaggregat
- 67: Erste Beschleunigungsstrecke
- 68: Zweite Beschleunigungsstrecke
- 69: Erster Hammer
- 70: Zweiter Hammer
- 71: Riemen
- 80: Steuereinheit
- 81: Leistungssteller
- 82: Motor
- 83: Fördereinheit

## Patentansprüche

1. Schlagschneidevorrichtung mit einer Schneideeinheit (10, 61) zum Bearbeiten von Werkstücken (2), einer Beschleunigungseinheit (30, 66) und einem gegen die Schneideeinheit (10, 61) beschleunigbaren Schlagelement (21; 69, 70),
**dadurch gekennzeichnet,**
**dass** das Schlagelement (21; 69, 70) und die Beschleunigungseinheit (30, 66) über eine Beschleunigungsstrecke mittels einer lösbaren Kopplung verbunden sind, wobei das Schlagelement nach der Beschleunigung durch die Beschleunigungseinheit und vor dem Auftreffen auf die Schneideeinheit (10, 61) von der Beschleunigungseinheit entkoppelbar ist.

2. Vorrichtung nach Anspruch 1, **dadurch gekennzeichnet, dass** die Beschleunigung der Beschleunigungseinheit (30, 66) einstellbar ist.

3. Vorrichtung nach Anspruch 1 oder 2, **dadurch gekennzeichnet, dass** die Beschleunigungseinheit (30, 66) einen Mitnehmer (36) aufweist, der zumindest über eine Beschleunigungsstrecke das Schlagelement (21; 69, 70) an die Beschleunigungseinheit (30, 66) koppelt.

4. Vorrichtung nach Anspruch 3, **dadurch gekennzeichnet, dass** der Mitnehmer (36) zumindest über die Beschleunigungsstrecke in eine Ausnehmung (28) des Schlagelements (21; 69, 70) greift.

5. Vorrichtung nach Anspruch 3 oder 4, **dadurch gekennzeichnet, dass** eine Führung (32) des Mitnehmers (36) zumindest über die Beschleunigungsstrecke parallel zur Bahn des Schlagelements (21; 69, 70) verläuft und zum Entkoppeln des Mitnehmers von dem Schlagelement die Führung (32) des Mitnehmers von der Bahn des Schlagelements abweicht.

6. Vorrichtung nach Anspruch 3, 4 oder 5, **dadurch gekennzeichnet, dass** der Mitnehmer (36) an einem band- oder seilartigen Element angeordnet ist, insbesondere an einem Riemen oder einer Kette.

7. Vorrichtung nach Anspruch 6, **dadurch gekennzeichnet, dass** die Beschleunigungseinrichtung (30, 66) im Bereich der Schneideeinheit (10, 61) zumindest ein Umlenkelement (34) zum Umlenken des band- oder seilartigen Elements (32) aufweist.

8. Vorrichtung nach Anspruch 6 oder 7, **dadurch gekennzeichnet, dass** das bandartige Element (32) endlos und über zumindest zwei Umlenkelemente (33, 34) geführt ist, wobei zumindest eines der Umlenkelemente (33) angetrieben ist.

9. Vorrichtung nach einem der vorhergehenden Ansprüche, **dadurch gekennzeichnet, dass** das Schlagelement (21; 69, 70) über eine Entkoppel-/Einkoppeleinheit mit der Beschleunigungseinheit (30, 66) verbunden ist.

10. Vorrichtung nach einem der vorhergehenden Ansprüche, **dadurch gekennzeichnet, dass** das Schlagelement (21; 69, 70) in einer Führungseinrichtung (22) gelagert ist.

11. Vorrichtung nach Anspruch 10, **dadurch gekennzeichnet, dass** das Schlagelement (21; 69, 70) über zumindest ein Gleitelement (26) mit der Führungseinrichtung (22) verbunden ist.

12. Vorrichtung nach Anspruch 11, **dadurch gekennzeichnet, dass** das zumindest eine Gleitelement (26) beweglich in einer Aufnahme (25) am Schlagelement (21; 69, 70) gelagert ist und zwischen Gleitelement und Aufnahme ein Dämpfungselement (27) angeordnet ist.

13. Vorrichtung nach einem der vorhergehenden Ansprüche, **dadurch gekennzeichnet, dass** zumindest die Schneideeinheit (10, 61) auf einer Stützstruktur (31) aus Mineralguss lagert.

14. Vorrichtung nach einem der vorhergehenden Ansprüche, **gekennzeichnet durch** ein Gegenschlagelement (70), das gegenläufig zum Schlagelement (69) auf die Schneideeinheit (61) beschleunigbar ist.

15. Vorrichtung nach einem der vorhergehenden Ansprüche, **dadurch gekennzeichnet, dass** das Schlagelement (21; 69, 70) eine sich zur Schlagfläche hin verjüngende Form aufweist.

16. Vorrichtung nach einem der vorhergehenden Ansprüche, wobei die Schneideeinheit zwei Matrizenelementen (12, 13; 62, 63) zum Fassen eines zu bearbeitenden Werkstücks (2) aufweist, wobei zumindest eines der Matrizenelemente relativ zum anderen Matrizenelement beweglich gelagert ist, **dadurch gekennzeichnet, dass** zwischen einem Träger (10; 62, 63) und dem zumindest einen beweglichen Matrizenelement (13; 62, 63), gegenüberliegend zur Aufschlagseite des beweglichen Matrizenelements eine Dämpfungseinrichtung (19; 64, 65) angeordnet ist.

17. Vorrichtung nach Anspruch 16, **dadurch gekennzeichnet, dass** die Dämpfungseinrichtung (19; 64, 65) zumindest eine Ringfeder (51, 52) aufweist.

18. Verfahren zum Beschleunigen eines Schlagelements (21; 69, 70) auf eine Schneideeinheit (10, 61) zum Bearbeiten von Werkstücken (2),
wobei während einer Beschleunigungsphase das Schlagelement (21; 69, 70) mittels einer lösbaren Kopplung mit einer Beschleunigungseinheit (30, 66) verbunden ist **dadurch gekennzeichnet, dass** die Beschleunigungseinheit das Schlagelement über eine Beschleunigungsstrecke mitführt;
wobei unmittelbar im Anschluss an die Beschleunigungsphase oder nach einer vorgegebenen Zeit oder Strecke mit kraftfreier Kopplung zwischen Schlagelement (21; 69, 70) und Beschleunigungseinheit (30, 66) im Anschluss an die Beschleunigungsphase eine Entkopplung zwischen Schlagelement und Beschleunigungseinheit erfolgt; und
wobei sich an die Beschleunigungsphase für das Schlagelement (21; 69, 70) und die Entkopplung eine kräftefreie oder im Wesentlichen kräftefrei Fortbewegungsphase anschließt, bevor das Schlagelement auf die Schneideeinheit (10, 61) auftrifft.

## Claims

1. Impact cutting device comprising a cutting unit (10, 61) for processing workpieces (2), an acceleration unit (30, 66) and an impact element (21; 69, 70) that can be accelerated towards the cutting unit (10, 61),
**characterized in that**
the impact element (21; 69, 70) and the acceleration unit (33, 66) are connected over an acceleration distance by means of a detachable coupling, wherein the impact element can be decoupled from the acceleration unit after having been accelerated by the acceleration unit and prior to striking the cutting unit (10,61).

2. Device according to claim 1, **characterized in that** the acceleration of the acceleration unit (30, 66) is adjustable.

3. Device according to claim 1 or 2, **characterized in that** the acceleration unit (30, 66) comprises a carrier (36) coupling the impact element (21; 69, 70) to the acceleration unit (30, 66) at least over an acceleration distance.

4. Device according to claim 3, **characterized in that** the carrier (36) engages with a recess (28) of the impact element (21; 69, 70) at least over the acceleration distance.

5. Device according to claim 3 or 4, **characterized in that** a guiding (32) of the carrier (36) runs parallel to the path of the impact element (21; 69, 70) at least along the acceleration distance and the guiding (32) of the carrier deviates from the path of the impact element for decoupling the carrier from the impact element.

6. Device according to claim 3, 4 or 5, **characterized in that** the carrier (36) is arranged on a strip- or cordlike element, in particular on a belt or a chain.

7. Device according to claim 6, **characterized in that** in the region of the cutting unit (10, 61) the acceleration unit (30, 66) comprises at least one deflecting element (34) for deflecting the strip- or cordlike element (32).

8. Device according to claim 6 or 7, **characterized in that** the striplike element (32) is endless and guided over at least two deflecting elements (33, 34), wherein at least one of the deflecting elements (33) is driven.

9. Device according to any of the previous claims, **characterized in that** the impact element (21; 69, 70) is connected to the acceleration unit (30, 66) via a decoupling/coupling unit.

10. Device according to any of the previous claims, **characterized in that** the impact element (21; 69, 70) is supported in a guiding device (22).

11. Device according to claim 10, **characterized in that** the impact element (21; 69, 70) is connected to the guiding device (22) via at least one sliding element (26).

12. Device according to claim 11, **characterized in that** the at least one sliding element (26) is moveably supported in a recession (25) on the impact element (21; 69, 70) and a damping element (27) is arranged between the sliding element and the recession.

13. Device according to any of the previous claims, **characterized in that** at least the cutting unit (10, 61) is supported on a mineral cast supporting structure (31).

14. Device according to any of the previous claims, **characterized by** a counter impact element (70) which can be accelerated in the direction opposite to the impact element (69) towards the cutting unit (61).

15. Device according to any of the previous claims, **characterized in that** the impact element (21; 69, 70) comprises a shape tapered towards the impact surface.

16. Device according to any of the previous claims, wherein the cutting unit comprises two matrix elements (12, 13; 62, 63) for holding a workpiece (2) to be processed, wherein at least one of the matrix elements is moveably supported relative to the other matrix element, **characterized in that** a damping unit (19; 64, 65) is arranged between a support (10; 62, 63) and the at least one moveable matrix element (13; 62, 63), opposite to the impinging side of the moveable matrix element.

17. Device according to claim 16, **characterized in that** the damping unit (19; 64, 65) comprises at least one annular spring (51, 52).

18. Method for accelerating an impact element (21; 69, 70) to a cutting unit (10, 61) for processing workpieces (2),
wherein during an acceleration phase the impact element (21; 69, 70) is connected to an acceleration unit (30, 66) by means of a resolvable coupling, **characterized in that** the acceleration unit carries the impact element over an acceleration distance;
wherein immediately subsequent to the acceleration phase or after a predetermined time or distance with force-free coupling between the impact element (21; 69, 70) and acceleration unit (30, 66) subsequent to the acceleration phase a decoupling between impact element and acceleration unit is effected; and
wherein prior to the impingement of the impact element on the cutting unit (10, 61), a moving phase being free of force or substantially free of force is subsequent to the acceleration phase and the decoupling of the impact element (21; 69, 70).

## Revendications

1. Dispositif de coupe par impact doté d'une unité de coupe (10, 61) pour l'usinage de pièces (2), d'une unité d'accélération (30, 66) et d'un élément d'impact (21 ; 69, 70) pouvant être accéléré contre l'unité de coupe (10, 61),
**caractérisé en ce que**
l'élément d'impact (21 ; 69, 70) et l'unité d'accélération (30, 66) sont reliés sur une distance d'accélération au moyen d'un dispositif d'accouplement amovible, l'élément d'impact pouvant être désaccouplé après l'accélération par l'unité d'accélération et avant que l'unité d'accélération ne rencontre l'unité de coupe (10, 61).

2. Dispositif selon la revendication 1, **caractérisé en ce que** l'accélération de l'unité d'accélération (30, 66) est réglable.

3. Dispositif selon la revendication 1 ou 2, **caractérisé en ce que** l'unité d'accélération (30, 66) présente un entraîneur (36), lequel couple, au minimum sur une distance d'accélération, l'élément d'impact (21 ; 69, 70) à l'unité d'accélération (30, 66).

4. Dispositif selon la revendication 3, **caractérisé en ce que** l'entraîneur (36) s'engage, au minimum sur la distance d'accélération, dans un évidement (28) de l'élément d'impact (21 ; 69, 70).

5. Dispositif selon la revendication 3 ou 4, **caractérisé en ce qu'**un guidage (32) de l'entraîneur (36) se déplace, au minimum sur la distance d'accélération, parallèlement à la trajectoire de l'élément d'impact (21 ; 69, 70), et **en ce que** le guidage (32) de l'entraîneur s'écarte de la trajectoire de l'élément d'impact pour désaccoupler l'entraîneur de l'élément d'impact.

6. Dispositif selon la revendication 3, 4 ou 5, **caractérisé en ce que** l'entraîneur (36) est disposé sur un élément de type bande ou câble, en particulier sur une courroie ou une chaîne.

7. Dispositif selon la revendication 6, **caractérisé en ce que** l'unité d'accélération (30, 66) présente, dans la zone de l'unité de coupe (10, 61), au moins un élément de déviation (34) pour dévier l'élément de type bande ou câble (32).

8. Dispositif selon la revendication 6 ou 7, **caractérisé en ce que** l'élément de type bande (32) est guidé sans fin et par l'intermédiaire d'au moins deux éléments de déviation (33, 34), au moins un des éléments de déviation (33) étant entrainé.

9. Dispositif selon l'une quelconque des revendications précédentes, **caractérisé en ce que** l'élément d'impact (21 ; 69, 70) est relié à l'unité d'accélération (30,66) par l'intermédiaire d'une unité de désaccouplement/accouplement.

10. Dispositif selon l'une quelconque des revendications précédentes, **caractérisé en ce que** l'élément d'impact (21 ; 69, 70) est logé dans un système de guidage (22).

11. Dispositif selon la revendication 10, **caractérisé en ce que** l'élément d'impact (21 ; 69, 70) est relié au système de guidage (22) par l'intermédiaire d'au moins un élément de glissement (26).

12. Dispositif selon la revendication 11, **caractérisé en ce que** le au moins un élément de glissement (26) est logé de manière mobile dans un logement (25) au niveau de l'élément d'impact (21 ; 69, 70), et **en ce qu'**un élément d'amortissement (27) est disposé entre l'élément de glissement et le logement.

13. Dispositif selon l'une quelconque des revendications précédentes, **caractérisé en ce qu'**au moins l'unité de découpe (10, 61) est logée sur une structure d'appui (31) en fonte minérale.

14. Dispositif selon l'une quelconque des revendications précédentes, **caractérisé par** un élément de contre-impact (70) qui peut être accéléré dans le sens contraire de l'élément d'impact (69) sur l'unité de coupe (61).

15. Dispositif selon l'une quelconque des revendications précédentes, **caractérisé en ce que** l'élément d'impact (21 ; 69, 70) présente une forme s'amincissant en direction de la surface d'impact.

16. Dispositif selon l'une quelconque des revendications précédentes, l'unité de coupe présentant deux éléments matriciels (12, 13 ; 62, 63) pour saisir une pièce devant être usinée (2), au moins un des éléments matriciels étant logé de manière mobile par rapport à l'autre élément matriciel, **caractérisé en ce qu'**entre un support (10 ; 62, 63) et le au moins un des éléments matriciels mobiles (13 ; 62, 63), un système d'amortissement (19 ; 64, 65) est disposé du côté opposé au côté d'impact de l'élément matriciel mobile.

17. Dispositif selon la revendication 16, **caractérisé en ce que** le dispositif d'amortissement (19 ; 64, 65) présente au minimum un ressort-bague (51, 52).

18. Procédé destiné à l'accélération d'un élément d'impact (21 ; 69, 70) sur une unité de coupe (10, 61) pour usiner des pièces (2),
l'élément d'impact (21 ; 69, 70) étant relié, pendant une phase d'accélération, à une unité d'accélération (30, 66) au moyen d'un dispositif d'accouplement amovible, **caractérisé en ce que** l'unité d'accélération emmène l'élément d'impact sur une distance d' accélération ;
un désaccouplement s'effectuant entre l'élément d'impact et l'unité d'accélération immédiatement après la phase d'accélération ou après une période ou une distance donnée, grâce à un accouplement sans force entre l'élément d'impact (21; 69, 70) et l'unité d'accélération (30, 66) suite à la phase d'accélération; et
une phase de progression sans force ou s'effectuant, pour l'essentiel, sans force faisant suite à la phase d'accélération pour l'élément d'impact (21 ; 69, 70) et au désaccouplement avant que l'élément d'impact ne rencontre l'unité de coupe (10, 61).
